# EUROPÄISCHE PATENTSCHRIFT

(11) **EP 3 070 553 B1**
(45) Veröffentlichungstag und Bekanntmachung des Hinweises auf die Patenterteilung: **08.05.2019**
(21) Anmeldenummer: 15159845.5
(22) Anmeldetag: 19.03.2015
(51) Int. Cl.: G05B 19/042

(54) **COMPUTERIMPLEMENTIERTES VERFAHREN ZUR RECHNERGESTÜTZTEN ÜBERSETZUNG EINES DIE FUNKTIONALITÄT EINES STEUERUNGSPROGRAMMES BESCHREIBENDEN GRAFISCHEN MODELLS**
COMPUTER-IMPLEMENTED METHOD FOR THE COMPUTER-ASSISTED TRANSLATION OF A GRAPHIC MODEL DESCRIBING THE FUNCTIONALITY OF A CONTROL PROGRAM
PROCÉDÉ MIS EN OEUVRE PAR INFORMATIQUE DESTINÉ À LA TRADUCTION ASSISTÉE PAR ORDINATEUR D'UN MODÈLE GRAPHIQUE DÉCRIVANT LA FONCTIONNALITÉ D'UN PROGRAMME DE COMMANDE

(43) Veröffentlichungstag der Anmeldung: 21.09.2016
(73) Patentinhaber: dSPACE digital signal processing and control engineering GmbH, 33102 Paderborn (DE)
(72) Erfinder: Fischer, Karsten, 33098 Paderborn (DE)

(56) Entgegenhaltungen:
- US-B2- 7 742 903
- Lars Haendel: "The Function Pointer Tutorials", , 22. März 2012 (2012-03-22), XP002744583, Gefunden im Internet: URL:https://web.archive.org/web/2012032213 0436/http://www.newty.de/fpt/intro.html [gefunden am 2015-09-16]

## Beschreibung

Die Erfindung betrifft ein computerimplementiertes Verfahren zur rechnergestützten Erzeugung eines ausführbaren Steuerungsprogramms zur Steuerung eines Steuerungssystems mit einer elektronischen Rechnereinheit, wobei die Funktionalität des Steuerungsprogramms zumindest teilweise in einem grafischen Modell beschrieben ist und das grafische Modell mindestens ein Submodell mit wenigstens einer Subfunktionalität umfasst, wobei das grafische Modell zunächst in Modellcode in einer höheren Programmiersprache übersetzt wird und der Modellcode nachfolgend in das auf dem Steuerungssystem ausführbare Steuerungsprogramm kompiliert wird. Ferner betrifft die Erfindung auch ein computerimplementiertes Verfahren zur rechnergestützten Übersetzung eines die Funktionalität eines Steuerungsprogramms beschreibenden grafischen Modells in einen Modellcode in einer höheren Programmiersprache, wobei das grafische Modell mindestens ein Submodell mit wenigstens einer Subfunktionalität umfasst.

Die zuvor beschriebenen computerimplementierten Verfahren zur Erzeugung eines ausführbaren Steuerungsprogramms und eines Modellcodes aus einem grafischen Modell sind seit Jahren im Bereich der Forschung unter Einsatz von Steuerungssystemen vor allem aber der technischen Entwicklung von Steuerungssystemen etabliert und werden beispielsweise intensiv im automotiven Bereich, in der Luft- und Raumfahrtindustrie, aber auch in anderen technischen oder industriellen Anwendungsfeldern eingesetzt. Bei den Steuerungssystemen handelt es sich im Regelfall um Steuergeräte, also Kleinrechner mit einer elektronischen Rechnereinheit, auf denen meist ein Echtzeitbetriebssystem betrieben wird. Steuerungssysteme in Form von Steuergeräten weisen üblicherweise vielfältige I/O-Schnittstellen auf, über die das Steuergerät mit einem zu beeinflussenden technisch-physikalischen Prozess in Verbindung steht, von dem also Prozessmessgrößen erfasst und auf den durch Ausgabe von Stellgrößen eingewirkt wird. Die externe Schnittstelle zum Prozess besteht demgemäß aus Sensoren und Aktoren.

Die Beschreibung der Funktionalität von Steuerungsprogrammen mit Hilfe von grafischen Modellen ist seit vielen Jahren - um nicht zu sagen Jahrzehnten - bekannt. Die Modelle werden meist in Form von Blockschaltbildern beschrieben, wie sie aus der Systemtheorie bekannt sind. Durch Signallinien wird hier zwischen den verschiedenen Blöcken des Blockschaltbildes ein Signalfluss definiert, wobei die Blöcke eine bestimmte Übertragungsfunktionalität zwischen ihren Eingängen und Ausgängen enthalten und die eingehenden Signale dieser Funktionalität numerisch unterziehen. Derartige grafische Modelle umfassen häufig Submodelle zur hierarchischen Strukturierung (zwecks Übersichtlichkeit), die im Fall von Blockschaltbildern oft wiederum das Erscheinungsbild eines Blockes haben, in dem auf einer feineren granularen Ebene mit elementaren Blöcken die Subfunktionalität des Submodells definiert ist. Ein Beispiel für eine etablierte Entwicklungsumgebung zur blockbasierten mathematischen Modellbildung ist Matlab mit Simulink von The MathWorks, Inc.

Die Verwendung von grafischen Modellen zur Beschreibung der Funktionalität des Steuerungsprogramms hat den besonderen Vorteil, dass die Modellierung vergleichsweise anschaulich und intuitiv ist. Vor allem die nachfolgende automatisierte Übersetzung des grafischen Modells in Code einer höheren Programmiersprache - den Modellcode - bringt den Vorteil mit sich, dass eine fehlerträchtige manuelle Programmierung/Umsetzung der modellierten Funktionalität in einer höheren Programmiersprache entfällt und inhaltliche Anpassungen der Funktionalität des Steuerungsprogramms erheblich schneller vorgenommen und auf dem Steuerungssystem getestet werden können. Zur Kenntlichmachung der inhaltlichen Herkunft - grafisches Modell - der Funktionalität des generierten Codes in der höheren Programmiersprache wird der übersetzte/generierte Code als "Modellcode" bezeichnet. Dies ist nicht zu Verwechseln mit einer möglicherweise existierenden textuellen Beschreibung/Definition des grafischen Modells in einer Beschreibungssprache der Modellierungsumgebung.

Der Modellcode wird dann in der Regel (zwecks Effizienz) von einem Compiler der höheren Programmiersprache in ein ausführbares Programm für die Rechnereinheit des Steuerungssystems kompiliert. Er könnte aber auch durch einen Interpreter auf dem Steuerungssystem ausgeführt werden oder als Eingabe zur Erzeugung einer HW-Schaltung für die Steuerung dienen (festverdrahtet oder für ein Field Programmable Gate Array (FPGA)).

Das ausführbare Steuerungsprogramm wird dann auf das Steuerungssystem geladen und dort auf der elektronischen Rechnereinheit - üblicherweise in Echtzeit - ausgeführt. Das Steuerungsprogramm realisiert dann auf dem Steuerungssystem im regelungstechnischen Sinne ein Abtastsystem, das mit dem verbundenen technisch-physikalischen Prozess in einem festen Zeitraster oder auch unter Verwendung mehrerer Zeitraster/Abtastzeiten in Verbindung steht.

Im Stand der Technik ist bekannt, dass für Submodelle innerhalb eines übergeordneten grafischen Gesamtmodells bei der Übersetzung des grafischen Modells in Modellcode in einer höheren Programmiersprache - dies wird auch als Codegenerierungsprozess bezeichnet - die jeweiligen Submodelle in Funktionen der höheren Programmiersprache übersetzt werden. Enthält beispielsweise ein grafisches Modell R ein Submodell V, dann könnte eine übergreifende Funktion r(...) erzeugt werden, innerhalb derer der Aufruf der die Subfunktionalität des Submodells abbildenden Submodellcodefunktion v(...) erfolgt. Bei dieser Realisierung ist beispielsweise i. d. R. eine erneute Übersetzung des gesamten grafischen Modells erforderlich, wenn innerhalb des grafischen Modells eine Veränderung vorgenommen wird, egal ob außerhalb oder innerhalb des Submodells V.

Gibt es für die Subfunktionalität des Submodells V mehrere Varianten V1, V2 dann gibt es im Stand der Technik verschiedene Möglichkeiten, diese Varianten der Subfunktionalität des Submodells V handzuhaben. Fraglich ist dann, wo und wann die Entscheidung für eine bestimmte Variante der Subfunktionalität getroffen werden soll. Dies kann beispielsweise bei der Übersetzung des grafischen Modells - also bei der Codegenerierung - in den Modellcode in einer höheren Programmiersprache geschehen - der Modellcode enthält dann nur die zuvor ausgewählte gültige Variante der Subfunktionalität. Für eine solche Auswahl gibt es beispielsweise Einstellungsmöglichkeiten in den Codegenerierungsoptionen wie in der US 7,742,903 B2 beschrieben oder in der grafischen Modellierungsumgebung Simulink von The Mathworks, Inc. beschrieben.

Dort ist auch angegeben, dass dies alternativ auch erst bei der Kompilierung des Modellcodes geschehen, wenn die in dem grafischen Modell bzw. in dem Submodell enthaltenen Varianten der Subfunktionalität von geeigneten Präprozessor-Anweisungen umschlossen sind, so dass zum Zeitpunkt der Kompilierung noch die Entscheidung für eine der möglichen Varianten der Subfunktionalität getroffen werden kann. Das dann entstehende ausführbare Steuerungsprogramm ist jedoch nur in der Lage, die zum Zeitpunkt der Kompilierung ausgewählte Variante der Subfunktionalität des Submodells auszuführen.

Bei der ersten beschriebenen Alternative zur Handhabung von Varianten von Subfunktionalitäten muss bei einer Änderung einer Variante oder bei der Entscheidung für eine andere Variante der gesamte Codegenerierungsprozess und die Kompilierung neu durchgeführt werden, wohingegen bei der zweiten Alternative lediglich eine erneute Kompilierung erfolgen muss, wobei gegenüber der ersten Alternative der generierte Modellcode insgesamt größer ist, weil er alle Varianten umfasst.

In höheren Programmiersprachen gibt es - neben bedingten Anweisungskonstrukten wie switch/if-Anweisungen - eine weitere Art der Implementierung von Varianten, die die Möglichkeit bietet, die Entscheidung für eine Variante auch noch nach der Kompilierung zu treffen (sogenanntes "late-binding"). Das Stilmittel hierfür sind die sogenannten "Funktions Zeiger". Sie können beispielsweise eine switch/if-Anweisung ersetzen, wie etwa beschrieben in "The Function Pointer Tutorials" unter https://web.archive.org/web/20120322/http://newty.de/fpt/intro.html

Vor dem beschriebenen Hintergrund ist es die Aufgabe der vorliegenden Erfindung, die zuvor erläuterten Verfahren zur rechnergestützten Erzeugung eines ausführbaren Steuerungsprogramms zur Steuerung eines Steuerungssystems bzw. zur rechnergestützten Übersetzung eines die Funktionalität eines Steuerungsprogramms beschreibenden graphischen Modells in einen Modellcode in einer höheren Programmiersprache so weiterzubilden und auszugestalten, dass die Behandlung von Subfunktionalitäten von Submodellen bei der Übersetzung in Modellcode in einer höheren Programmiersprache einfacher handhabbar ist, insbesondere auch die Handhabung von Varianten von Subfunktionalitäten eines Submodells auf einfachere Weise möglich ist.

Die zuvor aufgezeigte und hergeleitete Aufgabe wird bei dem eingangs beschriebenen computerimplementierten Verfahren zur rechnergestützten Erzeugung eines ausführbaren Steuerungsprogramms zunächst dadurch gelöst, dass das Submodell in eine Submodellcodefunktion in der höheren Programmiersprache übersetzt wird, dass das Modell in einen übergreifenden Modellcode in der höheren Programmiersprache übersetzt wird und dass die Submodellcodefunktion aus dem übergreifenden Modellcode mittels eines Zeigers auf die Submodellcodefunktion aufgerufen wird (z. B. ist der Zeiger als Funktionsparameter einer übergeordneten Modellcodefunktion im Modellcode definiert).

Wenn hier davon die Rede ist, dass für das Modell ein übergreifender Modellcode erzeugt wird und für das Submodell eine Submodellcodefunktion erzeugt wird, dann ist damit in erster Linie etwas über das Verhältnis von Modell und Submodell gesagt. Bei dem Modell kann es sich selbst wiederum um ein in einem übergeordneten Modell enthaltenes Submodell handeln, darauf kommt es bei der Betrachtung des erfindungsgemäßen Verfahrens nicht an. Es ist also nicht erforderlich, dass das grafische Modell ein Modell auf höchster Hierarchiestufe ist. Von Bedeutung ist, dass die für das Submodell generierte Submodellcodefunktion aus dem für das übergreifende Modell generierten Modellcode mittels eines Zeigers auf die Submodellcodefunktion aufgerufen wird, was eine bislang nicht bekannte modulare Entkopplung zwischen dem aus dem grafischen Modell generierten Modellcode und der Submodellcodefunktion ermöglicht.

Ferner ermöglicht diese Technik auch die einfache Abwandlung und den Wechsel der Subfunktionalität oder einer Variante der Subfunktionalität von Submodellen, ohne dass eine Neugenerierung des übergreifenden Modellcodes erforderlich wäre. Dies ist für die Entwicklung von Steuerungssystemen besonders vorteilhaft, weil dadurch beispielsweise ein Code-Review des übergreifenden Modellcodes vermieden werden kann. Ferner wird durch diese Maßnahme bewirkt, dass die Größe des generierten Codes insgesamt verringert wird und vor allem auch zur Laufzeit des Steuerungsprogramms zwischen Varianten von Subfunktionen gewechselt werden kann, wozu früher eine erneute umfassende Code-Generierung für das grafische Modell unter Aktivierung einer anderen Variante erforderlich gewesen ist oder eine erneute Kompilierung des gesamten generierten Codes unter Verwendung von Präprozessor-Schaltern.

Die erfindungsgemäß zum Einsatz kommenden Zeiger auf Funktionen werden auch als Funktionszeiger bezeichnet, dies oft im Zusammenhang mit der höheren Programmiersprache "C" bzw. der objektorientierten Variante "C++". Der übergreifende Modellcode enthält nicht die Definition der Submodellcodefunktion, sondern vielmehr nur den Aufruf einer (so gesehen beliebigen) Submodellcodefunktion mittels des Zeigers, der üblicherweise auf die Anfangsadresse der referenzierten Submodellcodefunktion im Speicher der Rechnereinheit zeigt.

Eine bevorzugte Variante des beanspruchten computerimplementierten Verfahrens zeichnet sich dadurch aus, dass die Submodellcodefunktion, die aus dem übergreifenden Modellcode mittels des Zeigers aufgerufen wird, in ein separates Modul codegeneriert wird, das insbesondere von dem Modul unabhängig ist, in das der übergreifende Modellcode codegeneriert worden ist. Bei dem separaten Modul kann es sich um eine separate Code-Datei, im Falle der höheren Programmiersprache C um eine separate Source- und/oder Header-Datei handeln, es kann sich aber auch beispielsweise um eine Bibliothek handeln, die mehrere (Sub-)Funktionsdefinitionen (z. B. Varianten der Subfunktionalität) enthält.

Durch die separate Datenhaltung lässt sich im Falle von Änderungen an einem Submodell oder an dem übergeordneten Modelle oder von Hinzufügung weiterer Submodell(varianten) ein Neugenerieren und Neukompilieren der Submodellcodefunktionen oder auch des übergeordneten grafischen Modellcodes vermeiden, da der übergreifende Modellcode die Submodellcodefunktion nur indirekt mittels eines Zeigers referenziert und nicht anhand ihres Namens aufruft.

Hinsichtlich der Handhabung von Varianten ist bei dem computerimplementierten Verfahren bevorzugt vorgesehen, dass das Submodell mehrere Varianten der Subfunktionalität umfasst und dass jede Variante der Subfunktionalität in eine Submodellcodefunktion-Variante in der höheren Programmiersprache übersetzt wird. Es besteht die Möglichkeit, jede Submodellcodefunktion-Variante in ein separates Modul zu codegenerieren, alternativ besteht aber auch die Möglichkeit, alle Varianten der Subfunktionalität in ein gemeinsames Modul zu codegenerieren. Je granularer die Ablage der Submodellcodefunktion-Varianten ist, um so weniger führt die Veränderung einer Variante dazu, dass auch andere Varianten codegeneriert bzw. kompiliert werden müssen, was den Effekt des Aufrufs von Submodellcodefunktionen aus dem übergreifenden Modellcode mittels Zeigern noch verbessert. Unnötig umfangreiche Code-Reviews und -Tests lassen sich so vermeiden.

In einer weiteren vorteilhaften Ausgestaltung des Verfahrens bei der Handhabung von Varianten der Subfunktionalität ist vorgesehen, dass in den übergreifenden Modellcode wenigstens eine bedingte Anweisung generiert wird zur Auswahl einer der Submodellcodefunktion-Varianten durch eine entsprechende Zeigerzuweisung, wobei ein besonderer Vorteil darin liegt, dass die bedingte Anweisung auch zur Laufzeit des Steuerungsprogramms ausgewertet werden kann; im Stand der Technik sind derartige Fallunterscheidungen zum Zeitpunkt der Codegenerierung bzw. der Kompilierung getroffen worden, nicht aber zur Laufzeit des ausführbaren Steuerungsprogramms.

Eine besonders bevorzugte Weiterbildung des erfindungsgemäßen Verfahrens betrifft die Fusion von Code, indem identische Subfunktionalitäten von Submodellen erkannt und/oder vom Nutzer gekennzeichnet werden. Im Detail zeichnet sich das diesbezüglich weiterentwickelte Verfahren dadurch aus, dass das grafische Modell wenigstens zwei Submodelle umfasst, wobei die Submodelle eine identische Subfunktionalität fi und voneinander verschiedene Subfunktionalitäten f1, f2 aufweisen, wobei die identische Subfunktionalität fi in eine Submodellcodefunktion fi übersetzt wird - der Einfachheit halber werden hier gleiche Bezeichner für die Funktionalitäten und die codierten Funktionen verwendet -, wobei die voneinander verschiedenen Subfunktionalitäten f1, f2 in verschiedene Submodellcodefunktionen f1, f2 übersetzt werden. Zur Realisierung der Gesamtfunktionalität der Submodelle ruft eine Gesamt-Submodellcodefunktion V die verschiedenen Submodellcodefunktionen f1, f2 durch einen Zeiger bzw. Zeigerparameter auf. Vorzugsweise beinhaltet die Gesamt-Submodellcodefunktion auch die identische Subfunktionalität fi der zwei Submodelle V1, V2, entweder als ausformulierte Codesequenz - inline - oder aber wieder als Funktionsaufruf fi. Die Ähnlichkeit der zwei Submodelle und deren identische Subfunktionalität fi lässt sich über bekannte Mustererkennungsverfahren detektieren, beispielsweise schon im grafischen Modell oder in der Beschreibungssprache des grafischen Modells. Derartige Verfahren sind bekannt ("Pattern-Matching"), diese Verfahren sind hier aber selbst nicht Gegenstand der Erfindung.

Der auch hier aus den vorbezeichneten Gründen schon besonders vorteilhafte Aufruf der verschiedenen Submodellcodefunktionen f1, f2 lässt sich hinsichtlich eines optimierten Code-Reviews noch verbessern, indem die identische Subfunktionalität fi und die voneinander verschiedenen Subfunktionalitäten f1, f2 in separate Module codegeneriert werden, insbesondere auch die voneinander verschiedenen Subfunktionalitäten f1, f2 in separate Module codegeneriert werden.

In einer weiteren vorteilhaften Ausgestaltung der Erfindung hat es sich als vorteilhaft herausgestellt, dass wenn das grafische Modell mindestens zwei Submodelle V1, V2 umfasst, wobei jedes Submodell mehrere Submodellvarianten V11, V12, V21, V22 aufweist, und die Submodellvarianten V11, V12, V21, V22 jedes Submodells V1, V2 in Abhängigkeit von identisch bedingten Anweisungen aufgerufen werden, dass die bedingten identischen Anweisungen zu einem einzigen zusammengefassten bzw. gemeinsamen Anweisungskomplex codegeneriert werden. Für die Submodellvarianten V11, V12, V21, V22 der zwei Submodelle V1, V2 werden Submodellcodefunktion-Varianten v11, v12, v21, v22 erzeugt und die Submodellcodefunktion-Varianten v11, v12, v21, v22 werden dann aus dem gemeinsamen Anweisungskomplex mittels Zeigern auf die Submodellcodefunktion-Varianten ausgewählt - und natürlich während des Programmlaufs im übergeordneten Modellfunktionscode aufgerufen . Durch diese Maßnahme wird der Umschaltpunkt (bzw. der zugehörige Code) aus den Submodellvarianten der Submodelle ausgelagert und ggf. zusammengefasst, beispielsweise in den hierarchisch höher stehenden Modellcode (z.B. als eigenständige Umschalt-Funktion), so dass insgesamt Code gespart wird, wie auch Laufzeit, was bei zeitkritischen Abtastsystemen durchaus von Interesse ist.

Das eingangs aufgezeigte und hergeleitete Problem wird auch gelöst bei dem eingangs beschriebenen computerimplementierten Verfahren zur rechnergestützten Übersetzung eines die Funktionalität eines Steuerungsprogramms beschreibenden grafischen Modells in einen Modellcode in einer höheren Programmiersprache, indem das Submodell in eine Submodellcodefunktion der höheren Programmiersprache übersetzt wird, das Modell in ein übergreifenden Modellcode in der höheren Programmiersprache übersetzt wird und die Submodellcodefunktion aus dem übergreifenden Modellcode mittels eines Zeigers auf die Submodellcodefunktion aufgerufen wird. Auf dieses Verfahren lassen sich alle Verfahrensschritte des zuvor erläuterten computerimplementierten Verfahrens zur Erzeugung eines ausführbaren Steuerungsprogramms ohne weiteres anwenden.

Die Aufgabe wird hinsichtlich der beiden vorgenannten Verfahren jeweils auch gelöst durch jeweils ein Computerprogrammprodukt mit einem Computerprogramm, das Softwaremittel zur Durchführung eines der vorbeschriebenen Verfahren aufweist, wenn das Computerprogramm in einem Computer ausgeführt wird.

Die Aufgabe wird auch gelöst durch eine Entwicklungsumgebung mit einem Computer, mit Eingabemitteln und mit Anzeigemitteln, wobei auf dem Computer das vorbeschriebene Verfahren zur rechnergestützten Erzeugung des ausführbaren Steuerungsprogramms zur Steuerung eines Steuerungssystems ausgeführt wird, wobei das Steuerungssystem eine elektronische Rechnereinheit umfasst, wobei die Funktionalität des Steuerungsprogramms zumindest teilweise in einem grafischen Modell beschrieben ist und das grafische Modell mindestens ein Submodell mit wenigstens einer Subfunktionalität umfasst und auf den Anzeigemitteln dargestellt ist und mit den Eingabemitteln bearbeitbar ist, wobei das grafische Modell zunächst in Modellcode in einer höheren Programmiersprache übersetzt wird und der Modellcode nachfolgend in das auf dem Steuerungssystem ausführbare Steuerungsprogramm kompiliert wird, wobei das Submodell in eine Submodellcodefunktion in der höheren Programmiersprache übersetzt wird, das Modell in einen übergreifenden Modellcode in der höheren Programmiersprache übersetzt wird und die Submodellcodefunktion aus dem übergreifenden Modellcode mittels eines Zeigers auf die Submodellcodefunktion aufgerufen wird.

Im Einzelnen gibt es nun eine Vielzahl von Möglichkeiten, das erfindungsgemäße computerimplementierte Verfahren zur rechnergestützten Erzeugung eines ausführbaren Steuerungsprogramms und das computerimplementierte Verfahren zur rechnergestützten Übersetzung eines grafischen Modells in einen Modellcode in einer höheren Programmiersprache auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen:
- Fig. 1: das aus dem Stand der Technik bekannte computer-implementierte Verfahren zur Erzeugung eines ausführbaren Steuerungsprogramms,
- Fig. 2: schematisch das aus dem Stand der Technik bekannte Verfahren zur Handhabung von Varianten in einem grafischen Modell zum Zeitpunkt der Codegenerierung und zum Zeitpunkt der Kompilierung des zuvor generierten Modellcodes,
- Fig. 3: schematisch das erfindungsgemäße Verfahren, bei dem die Submodellcodefunktion aus dem übergreifenden Modellcode mittels eines Funktions-Zeigers aufgerufen wird,
- Fig. 4: eine bevorzugte Ausgestaltung des erfindungsgemäßen Verfahrens zur Handhabung von mehreren Varianten eines Submodells,
- Fig. 5: eine weitere Ausgestaltung des erfindungsgemäßen Verfahrens zur Handhabung von Submodellen mit identischen und sich unterscheidenden Funktionsanteilen und
- Fig. 6: schematisch eine Weiterentwicklung der erfindungsgemäßen Verfahren zur Handhabung von Subsystemen mit identisch bedingten Anweisungen.

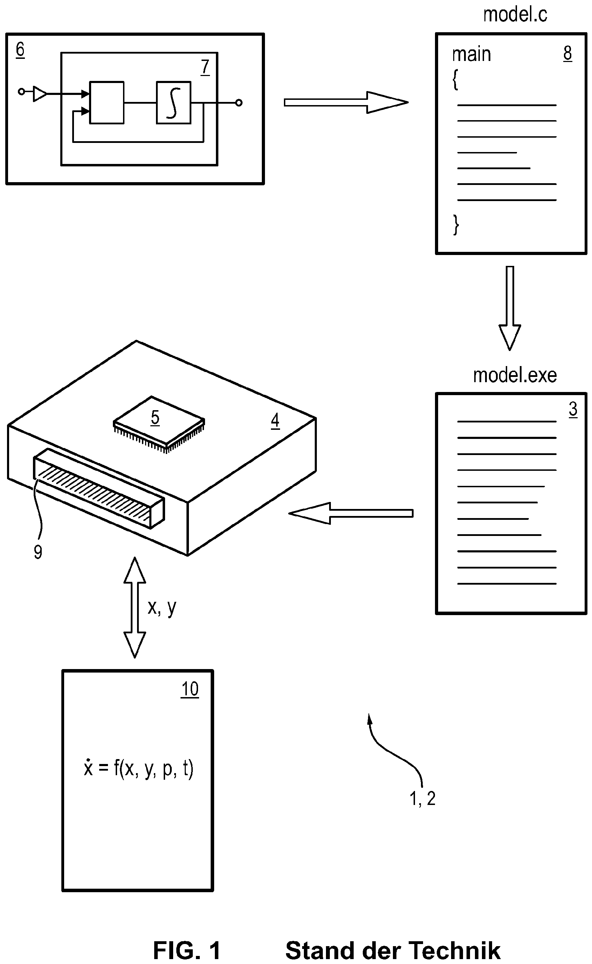

Fig. 1 zeigt ein computerimplementiertes Verfahren 1 zur rechnergestützten Erzeugung eines ausführbaren Steuerungsprogramms 3 zur Steuerung eines Steuerungssystems 4, wobei das Steuerungssystem 4 eine elektronische Rechnereinheit 5 aufweist. Die Funktionalität des Steuerungsprogramms 3 wird zumindest teilweise in einem grafischen Modell 6 beschrieben, wobei das grafische Modell 6 ein Submodell 7 mit einer Subfunktionalität umfasst. Das grafische Modell 6 wird zunächst in Modellcode 8 in einer höheren Programmiersprache übersetzt. Der Modellcode 8 wird nachfolgend in das auf dem Steuerungssystem 4 ausführbare Steuerungsprogramm 3 kompiliert und das Steuerungsprogramm 3 wird dann üblicherweise auf das Steuerungssystem 4 geladen und dort ausgeführt.

Bei dem Steuerungssystem 4 handelt es sich im dargestellten Ausführungsbeispiel um ein Steuergerät mit einer auf einem 32-Bit-Prozessor basierenden Rechnereinheit 5, wobei das Steuergerät 4 eine Vielzahl an I/O-Schnittstellen 9 aufweist. Über die I/O-Schnittstellen 9 steht das Steuerungssystem 4 mit einem technisch-physikalischen Prozess 10 interagierend in Verbindung, gibt nämlich Stellgrößen y an den technisch-physikalischen Prozess 10 - beispielsweise zur Ansteuerung von hier im Detail nicht dargestellten Aktoren - aus und erhält von dem Prozess 10 Informationen über Zustandsgrößen x, beispielsweise durch messtechnische Erfassung dieser Größen.

Der in Fig. 1 dargestellte Vorgang des Entwurfs einer Steuerung/Regelung mit Hilfe des grafischen Modells 6, das anschließende Übersetzen des grafischen 6 in den Modellcode 8 einer höheren Programmiersprache, die Kompilierung des Modellcodes 8 in das ausführbare Steuerungsprogramm 3 sowie das Laden des ausführbaren Steuerungsprogramms 3 auf die Zielhardware in Form des Steuerungssystems 4 sowie die nachfolgend einsetzende Interaktion des Steuerungssystems 4 mit dem technisch-physikalischen Prozess 10 ist ein üblich gewordener Entwicklungsprozess. Jeder Eingriff in den Entwicklungsprozess, der sich auf das ausführbare Steuerungsprogramm 3 auswirkt, hat somit auch einen Effekt auf die Interaktion mit dem technisch-physikalischen Prozess 10. Eine Optimierung des ausführbaren Steuerungsprogramms 3 führt beispielsweise dazu, dass auf dem Steuerungssystem 4 schnellere Abtastzeiten realisiert werden oder umfangreichere Berechnungen in einer gleichbleibenden Abtastzeit realisiert werden können.

Fig. 1 zeigt damit auch grundsätzlich ein computerimplementiertes Verfahren 2 zur rechnergestützten Übersetzung des die Funktionalität des Steuerungsprogramms 3 beschreibenden grafischen Modells 6 in den Modellcode 8 in einer höheren Programmiersprache, wobei das grafische Modell 6 mindestens ein Submodell 7 mit wenigstens eine Subfunktionalität aufweist.

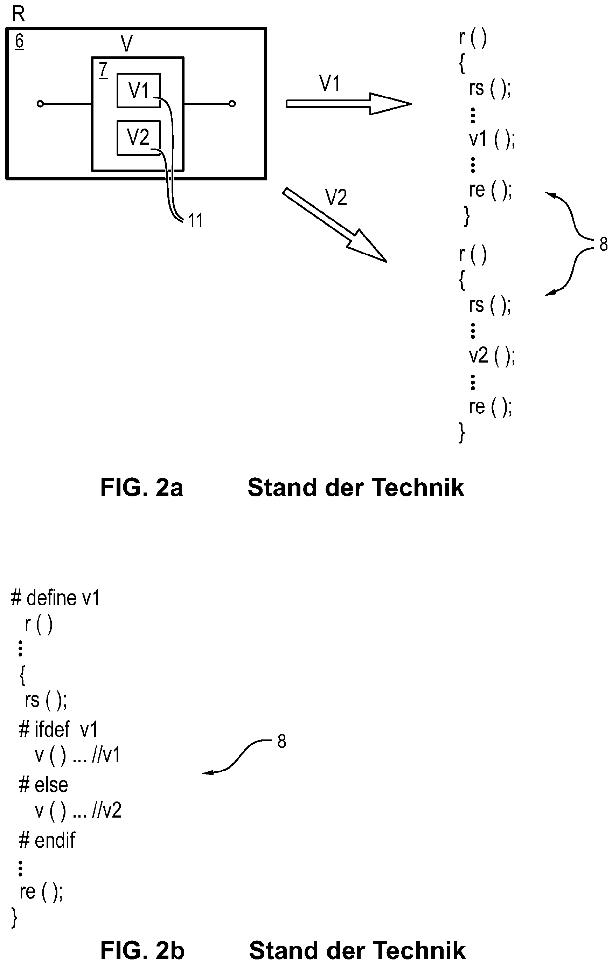

In Fig. 2 ist zunächst dargestellt ein grafisches Modell 6, R mit einem Submodell 7, V, das zwei alternative Submodellvarianten 11, V1, V2 umfasst. Die mit den Varianten 11, V1, V2 verknüpften Subfunktionalitäten werden also nie gleichzeitig, sondern nur alternativ ausgeführt. Fig. 2 zeigt aus dem Stand der Technik bekannte Vorgehensweisen zur Handhabung solcher Varianten 11, V1, V2 der Subfunktionalität des Submodells 7, V. Bei der ersten Vorgehensweise gemäß Fig. 2a wird bereits vor der Übersetzung des grafischen Modells 6, R in den Modellcode 8 festgelegt, welche Variante V1, V2 realisiert werden soll. Entsprechend enthält der generierte Modellcode 8 auch nur den Aufruf und die programmtechnische Implementierung der jeweils ausgewählten Variante V1, V2. In den dargestellten Modellcode-Beispielen 8 steht r() für die Funktion des grafischen Modells 6 mit den beispielhaft angeführten Start- und Endfunktionalitäten rs() und re(). Für den Fall, dass die Variante V1 der Subfunktionalität ausgewählt worden ist, wird eine korrespondierende Funktion im Modellcode 8 implementiert, hier symbolisiert durch v1(). Entsprechendes gilt für die zuvor vorgenommene Auswahl der Variante V2 der Subfunktionalität des Submodells 7, V, hier wird die Funktionalität implementiert durch eine entsprechende Funktion v2(). Soll zwischen den Varianten gewechselt werden ist also ein neuer Codegenerierungsprozess anzustoßen mit nachfolgender Kompilierung, oder es sind von vorneherein für alle denkbaren Varianten Modellcodes 8 zu erzeugen, was je nach möglichen Varianten eines Modells 6, R zu einem erheblichen und unerwünschten Umfang des Modellcodes 8 führt.

In Fig. 2b ist eine andere bekannte Möglichkeit zum Umgang mit mehreren Varianten 11, V1, V2 einer Subfunktionalität eines Submodells 7, V dargestellt. Hier erfolgt die Auswahl einer der Varianten 11, V1, V2 des Submodells 7, V nicht zur Zeit der Erzeugung des Modellcodes 8, sondern vielmehr zum Zeitpunkt der Kompilierung des Modellcodes 8. In Fig. 2b sind in dem dargestellten Code-Beispiel entsprechende Präprozessor-Anweisungen verwendet worden, wie sie beispielsweise aus der Programmiersprache C bekannt sind. Bei dieser Möglichkeit der Handhabung von Varianten ist zwar keine Codegenerierung erforderlich, um eine Variante zu aktivieren, jedoch ist eine Neukompilierung des Modellcodes 8 erforderlich. Darüber hinaus ist der Modellcode 8 bei dieser Handhabung sehr umfangreich, da in ihm jegliche Varianten 11, V1, V2 von Submodellen 7, V des grafischen Modells 6, R berücksichtigt werden.

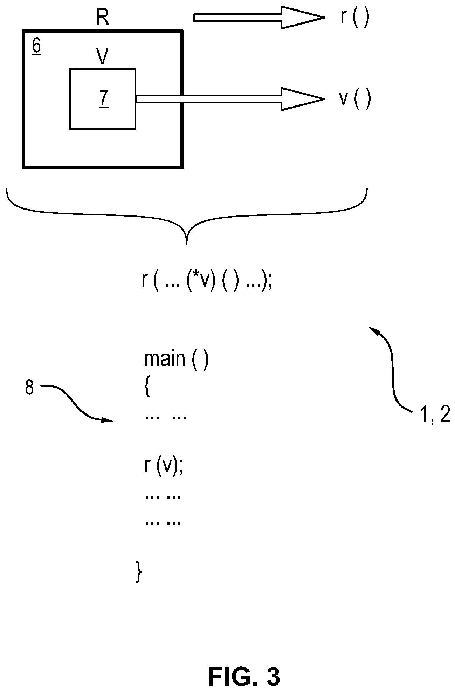

In den Fig. 3 bis 6 werden nun verschiedene Aspekte der erfindungsgemäßen computerimplementierten Verfahren 1 und 2 zur rechnergestützten Erzeugung eines ausführbaren Steuerungsprogramms 3 und zur rechnergestützten Übersetzung eines grafischen Modells 6 in Modellcode 8 gezeigt. In Fig. 3 ist zunächst dargestellt ein grafisches Modell 6, R, das ein Submodell 7, V umfasst. Erfindungsgemäß wird das Submodell 7, V in eine Submodellcodefunktion v in der höheren Programmiersprache übersetzt, die in Fig. 3 entsprechend der typischen Schreibweise für Funktionen in höheren Programmiersprachen als v() dargestellt ist. Ferner wird das Modell 6, R in einen übergreifenden Modellcode 8 in der höheren Programmiersprache übersetzt, was in Fig. 3 dargestellt ist als eine Funktion r().

Wie in dem Code-Beispiel in Fig. 3 unten zu erkennen ist, wird die Submodellcodefunktion v() dann aus dem übergreifenden Modellcode 8 in Form der Funktion r mittels eines Zeigers auf die Submodellcodefunktion v() aufgerufen. Dies verdeutlicht die Deklaration der Funktion r, die einen Funktionszeiger (*v)() als Parameter umfasst. Aufgrund dieser Maßnahme fällt es sehr leicht, das grafische Modell 6, R und das Submodell 7, V in dem generierten Code zu entkoppeln, da auf die Funktionalität des Submodells 7, V, also die Submodellcodefunktion v, nur noch verwiesen werden muss, es in dem übergreifenden Modellcode 8 also zunächst nicht von Interesse ist, auf welche konkrete Funktion der übergebene Zeiger verweist.

Die funktionale Entkopplung des übergreifenden Modellcodes 8 von der Submodellcodefunktion v ermöglicht auch, dass die Submodellcodefunktion v, die aus dem übergreifenden Modellcode 8 mittels eines Zeigers aufgerufen wird, in ein separates Modul codegeneriert werden kann, das vorteilhafterweise auch von dem Modul unabhängig ist, in das der übergreifende Modellcode 8 codegeneriert worden ist. Hier ist schon ohne weiteres zu erkennen, dass die Veränderung in einem der Module, die möglicherweise zu einem neuen Review und einem neuen Test diesen Moduls führt, nicht zwangsweise auch zu einem Review und einem neuen Test des in dem anderen Modul enthaltenen Codes führen muss.

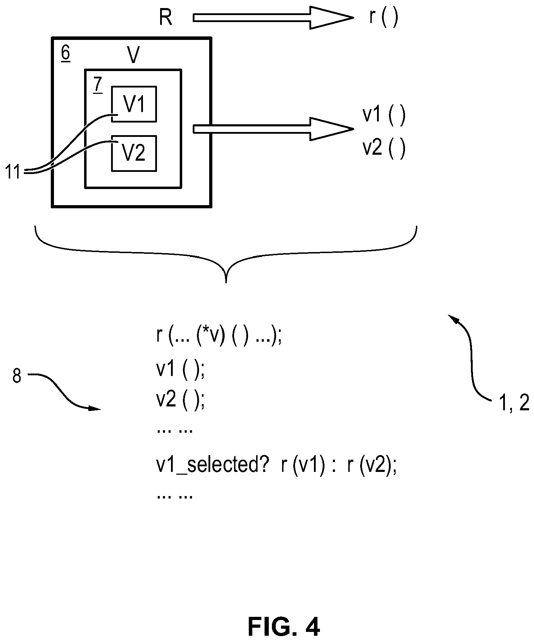

Das computerimplementierte Verfahren 1 gemäß Fig. 4 unterscheidet sich von dem im Fig. 3 dargestellten Verfahren dadurch, dass das grafische Modell 6, R ein Submodell 7, V umfasst, wobei das Submodell 7, V mehrere Varianten 11, V1, V2 einer Subfunktionalität umfasst und dass jede Variante 7, V1, V2 der Subfunktionalität in eine Submodellcodefunktion-Variante v1, v2 in der höheren Programmiersprache übersetzt wird, wobei die Submodellcodefunktion-Varianten v1, v2 in Fig. 4 wieder in der - unter anderem für die höhere Programmiersprache C typischen - Notation v1() und v2() dargestellt sind.

In den Code-Ausschnitten unten in Fig. 4 ist wiederum die Deklaration des übergreifenden Modellcodes 8 für das grafische Modell 6, R dargestellt in Form der Deklaration der Funktion r, die als Parameter einen Funktionszeiger (*v)() übergeben bekommt. Die Submodellcodefunktion-Varianten v1, v2 in der höheren Programmiersprache sind ebenfalls an geeigneter Stelle deklariert. Ganz unten ist zu erkennen, dass zur Laufzeit des Steuerungsprogramms 3 entschieden werden kann, welche der Varianten 11, V1, V2 des Submodells 7, V ausgeführt werden soll.

Der übergreifende Modellcode 8 ist im Grunde unberührt von einer Veränderung des Submodells 7, V bzw. der Varianten 11, V1, V2 der Subfunktionalität des Submodells 7, V. In dem Code-Beispiel von Fig. 4 ist ferner zu erkennen, dass in den übergreifenden Modellcode 8 eine bedingte Anweisung generiert worden ist zur Auswahl einer der Submodellcodefunktion-Varianten v1, v2 durch eine entsprechende Zeigerzuweisung. Im dargestellten Ausführungsbeispiel wird der bedingte ternäre Operator "?:" (Test ? Ausdruck1 : Ausdruck2) verwendet, wobei die Ausdrücke in Aufrufen der Varianten v1, v2 der Subfunktionalität des Submodells aus dem übergreifenden Modellcode 8 in Form der Funktion r() bestehen, wobei der Funktion r() Zeiger auf die entsprechenden Varianten v1, v2 der Subfunktionalität übergeben werden. Der in Fig. 4 dargestellte bedingte Aufruf von r() mit verschiedenen Funktionszeigern als Argument ist Bestandteil des übergreifenden Modellcodes 8, beispielsweise wie folgt:

```
     m()
     {
       v1_selected? r(v1) : r(v2);
     }
```

Eine alternative statische Generierung des übergreifenden Modellcodes 8 - beispielsweise für die Variante V1 - könnte wie folgt lauten:

```
     m() // m variant v1
     {
       r(v1);
     }
```

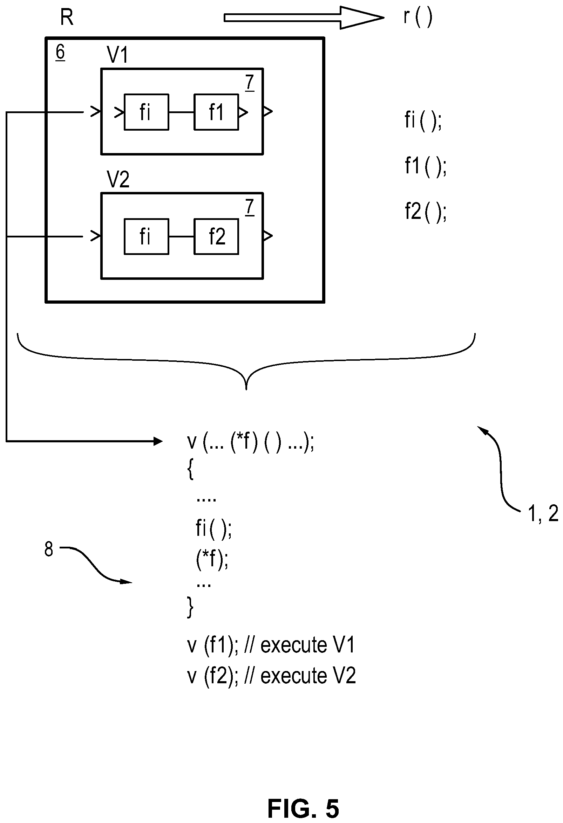

In Fig. 5 ist eine erfindungsgemäße Ausgestaltung des computerimplementierten Verfahrens 1 und auch des Verfahrens 2 dargestellt. Das grafische Modell 6, R weist zwei Submodelle V1, V2 auf, die hier allerdings nicht als alternative Varianten zu verstehen sind, sondern als zwei Submodelle V1, V2 die nebeneinander gleichzeitig existieren. Die Submodelle V1, V2 weisen eine identische Subfunktionalität fi und voneinander verschiedene Subfunktionalitäten f1, f2 auf.

Die identische Subfunktionalität fi beider Submodelle V1, V2 wird in eine einzige Submodellcodefunktion fi übersetzt. Die voneinander verschiedenen Subfunktionalitäten f1, f2 werden hingegen in verschiedene Submodellcodefunktionen f1, f2 übersetzt. Zur Realisierung der Gesamtfunktionalität der beiden Submodelle V1, V2 wird nun eine Gesamt-Submodellcodefunktion v generiert, die die verschiedenen Submodellcodefunktionen f1, f2 durch einen Zeiger aufruft.

Durch diese Realisierung von Submodellen 7, V, die einen Gleichanteil fi und Differenzanteile f1, f2 aufweisen, kann ein sehr kompakter Code erzeugt werden. Auch hier ist es wieder möglich durch den modularen Aufbau des Modellcodes 8, Teile des Modellcodes - beispielsweise eine der verschiedenen Subfunktionalitäten f1, f2, zu ändern, ohne gleichzeitig die Gesamt-Submodellcodefunktion v erneut zu überprüfen, da diese sich durch die geschickte Übergabe der Funktion mittels eines Funktionszeigers überhaupt nicht ändert. In der in Fig. 5 dargestellten Gesamt-Submodellcodefunktion v wird immer die identische Subfunktionalität fi aufgerufen und je nach übergebenem Funktionszeiger auf eine der verschiedenen Subfunktionalitäten f1, f2 das gewünschte Submodell V1 oder V2 realisiert.

Eine andere im Zusammenhang mit Fig. 5 mögliche Implementierung könnte wie folgt lauten:

```
     r ()
     {
     v(f1);
     v(f2);
     }
```

Dies macht deutlich, das beide Funktionalitäten der Submodelle V1 und V2 innerhalb der Funktion r() aufgerufen werden, denn bei den Submodellen V1, V2 handelt es sich ja nicht um alternative Varianten, sondern um gleichzeitig wirksame Submodelle V1 und V2.

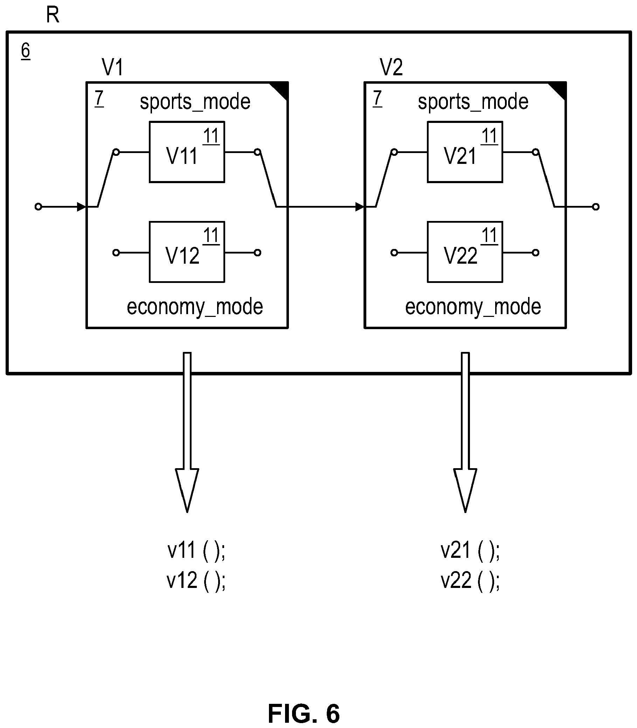

In Fig. 6 ist eine weitere nützliche Weiterentwicklung des zuvor beschriebenen Verfahrens dargestellt. Das grafische Modell 6, R weist hier zwei Submodelle V1, V2 auf. Jedes der Submodelle V1, V2 weist darüber hinaus mehrere Submodellvarianten auf, das Submodell V1 hat die Submodellvarianten V11 und V12 und das Submodell V2 verfügt über die Submodellvarianten V21 und V22. In jedem der Submodelle V1, V2 kann zwischen den beiden Varianten umgeschaltet werden; im vorliegenden Fall hängt die Wahl zwischen den Varianten ab von der Wahl des Fahrmodus "sports_mode" (V11, V21) oder "economy_mode" (V12, V22). Mit anderen Worten werden die Submodellvarianten V11, V12; V21, V22 jedes Submodells V1, V2 in Abhängigkeit von identisch bedingten Anweisungen aufgerufen.

Die Idee besteht nun darin, dass die bedingten identischen Anweisungen zu einem einzigen gemeinsamen Anweisungskomplex zusammengefasst und codegeneriert werden, so dass im Ergebnis die Anzahl der bedingten Anweisungen reduziert wird. Dabei werden für die Submodellvarianten V11, V12; V21, V22 der zwei Submodelle V1, V2 Submodellfunktion-Varianten v11, v12; v21, v22 erzeugt und die Submodellcodefunktion-Varianten v11, v12; v21, v22 werden aus dem gemeinsamen bedingten Anweisungskomplex mittels Zeigern auf die Submodellcodefunktion-Varianten ausgewählt - und zur Laufzeit des ausführbaren Steuerungsprogramms 3 auch aufgerufen.

Nachfolgend ist eine mögliche Realisierung der Zusammenfassung von bedingten Anweisungen anhand eines Code-Beispiels erläutert, das auch in Zusammenhang mit der skizzierten Situation in Fig. 6 gelesen werden kann. In dem nachfolgenden Code-Beispiel existieren zwei Funktionen, die in sehr unterschiedlichen Abtastzeiten ausgeführt werden. Die Funktion "Driving_Switch_100ms" wird lediglich alle 100 ms ausgeführt, wohingegen die Funktion "r_1ms" 100 mal so häufig, nämlich jede Millisekunde, ausgeführt wird (bzw. werden muss, weil dies beispielsweise die Steuerung für das technische System so erfordert). Bei Analyse des zugrundeliegenden Modells sind identisch bedingte Anweisungen zur Auswahl der entsprechenden Varianten erkannt worden (nämlich die Auswahl eines Fahrmodus, in Fig. 6 die Auswahl des "economy-" oder des "sports-mode") und zu einem einzigen gemeinsamen identischen Anweisungskomplex zusammengefasst worden, im vorliegenden Fall in dem Modellcode für die deutlich langsamer ausgeführte Funktion "Driving_Switch_100ms".

Die Auslagerung des gemeinsamen identischen Anweisungskomplexes in die langsamere Task ist sinnvoll, da eine Umschaltung des Fahrmodus gemeinschaftlich für alle Funktionen erfolgen muss und die langsamste Funktion deshalb maßgeblich ist für die schnellste Änderungsrate. In der langsamen Funktion "Driving_Switch_100ms" wird deshalb zunächst der Fahrmodus "Driving_mode" abgefragt. In Abhängigkeit von dem Abfrageergebnis ("sports_mode" oder "economy_mode") werden entsprechende Funktionspointer gesetzt, nämlich entweder auf die Submodellcodefunktion-Varianten v11 und v21 oder auf die Submodellcodefunktion-Varianten v12 und v22.

```
 Driving_Switch_100ms() // 100ms task
 {
     driving_mode = read_hw_driving_mode_switch();
     if(driving_mode == sports_mode){
        gp_v1 = &v11; // set function pointers to sports variant
        gp_v2 = &v21; // for several (sub-)functions }
     else
     if (driving_mode == economy_mode){
        gp_v1 = &v21; // set function pointers to economy variant
        p_v2 = &v22; // for several (sub-)functions ...}
          }
 r_1ms() // 1ms task
 {
     (*gp_v1)(...); // call sub-function for selected variant
     (*gp_v2)(...); // via pointer; no if-code to check variant
         }
```

Durch die vorgeschlagene Vorgehensweise werden demnach 200 if/else-Anweisungsausführungen in r1_ms (bzw. in V1 und V2) pro 100ms Laufzeit auf eine einzige if/else-Anweisungsausführung reduziert, denn in der schnell ausgeführten Task r_1ms sind alle bedingten Anweisungen eliminiert worden. Die skizzierte Lösung zeichnet sich ferner dadurch aus, dass bei dem Aufruf der Submodellcodefunktion-Varianten v11, v21; v21, v22 aus dem gemeinsamen identischen Anweisungskomplex mittels Zeigern Signalflussabhängigkeiten berücksichtigt werden und die Aufrufreihenfolge der Submodellcodefunktion-Varianten v11, v12; v21, v22 dem Signalfluss entspricht. Dies ist daran zu erkennen, dass in der schnellen Task r_1ms immer die Submodellcodefunktion-Variante v11, v12 des ersten Submodells V1 vor der Submodellcodefunktion-Varianten v21, v22 des zweiten Submodells V22 ausgeführt wird.

In Fig. 6 ist noch eine weitere Besonderheit dargestellt, dass nämlich in dem grafischen Modell 6, R gekennzeichnet wird, welche Submodellcodefunktion v eines Submodells 7, V aus dem übergreifenden Modellcode 8 mittels eines Zeigers auf die Submodellcodefunktion v aufgerufen wird. Die Kennzeichnung besteht in Fig. 6 darin, dass die rechte obere Ecke der Submodelle 7, V1, V2 - bzw. der sie repräsentierenden Blöcke - eine ausgefüllte obere rechte Ecke haben. In der Praxis, also in einer computerimplementierten Modellierungsumgebung, würde dies beispielsweise durch eine per Mausklick bewirkbare Kennzeichnung der entsprechenden Ecken von Submodell-Blöcken realisiert werden.

## Patentansprüche

1. Computerimplementiertes Verfahren (2) zur rechnergestützten Übersetzung eines die Funktionalität eines Steuerungsprogramms (3) beschreibenden graphischen Modells (6) in einen Modellcode (8) in einer höheren Programmiersprache, wobei das grafische Modell (6, R) mindestens zwei Submodelle (7, V, V1, V2) mit jeweils wenigstens zwei Subfunktionalitäten (f1, f2, fi) umfasst,
wobei die in den Submodellen (7, V, V1, V2) modellierten Subfunktionalitäten (fi, fl, f2) in Submodellcodefunktionen (v(), f1(), f2(), fi()) in der höheren Programmiersprache übersetzt werden,
wobei das Modell (6) in einen übergreifenden Modellcode (8, r()) in der höheren Programmiersprache übersetzt wird, **dadurch gekennzeichnet,**
**dass** die Submodellcodefunktionen (v(), f1(), f2(), fi()) aus dem übergreifenden Modellcode (8, r()) mittels eines Zeigers (*v, *f) auf die jeweilige Submodellcodefunktion (v(), f1(), f2(), fi()) aufrufbar sind und dass die Submodelle (V1, V2) eine identische Subfunktionalität (fi) und voneinander verschiedene Subfunktionalitäten (f1, f2) aufweisen, wobei die identische Subfunktionalität (fi) in eine einzige Submodellcodefunktion (fi()) übersetzt wird, wobei die voneinander verschiedenen Subfunktionalitäten (f1, f2) in verschiedene Submodellcodefunktionen (f1(), f2()) übersetzt werden und wobei eine Gesamt-Submodellcodefunktion (v()) generiert wird zur Übersetzung einer Gesamtfunktionalität der Submodelle (V1, V2), umfassend die identische Subfunktionalität (fi) und die verschiedenen Subfunktionalitäten (f1, f2) der Submodelle (V1, V2), in die Gesamt-Submodellcodefunktion (v()), wobei die Gesamt-Submodellcodefunktion (v()) die verschiedenen Submodellcodefunktionen (f1(), f2()) durch einen Zeiger (*f) aufruft.

2. Computerimplementiertes Verfahren nach Anspruch 1, **dadurch gekennzeichnet, dass** die Submodellcodefunktionen (v(), fi(), f1(), f2()), die aus dem übergreifenden Modellcode (8, r()) mittels eines Zeigers (*v, *f) aufgerufen werden, in separate Module codegeneriert werden, die insbesondere von dem Modul unabhängig sind, in das der übergreifende Modellcode (8, r()) codegeneriert wird.

3. Computerimplementiertes Verfahren (1) nach Anspruch 1 oder 2, **dadurch gekennzeichnet, dass** ein Submodell (7, V, V1, V2) mehrere Varianten (11, V1, V2) der jeweiligen Subfunktionalitäten umfasst und dass jede Variante (11, V1, V2) einer jeweiligen Subfunktionalität in eine Submodellcodefunkti-on-Variante (v1(), v2()) in der höheren Programmiersprache übersetzt wird, insbesondere jede Submodellcodefunktion-Variante (v1(), v2()) in ein separates Modul codegeneriert wird oder alle Varianten (11, V1, V2) der Subfunktionalität in ein gemeinsames Modul codegeneriert werden.

4. Computerimplementiertes Verfahren nach Anspruch 3, **dadurch gekennzeichnet, dass** in den übergreifenden Modellcode (8, r()) wenigstens eine bedingte Anweisung generiert wird zur Auswahl einer der Submodellcodefunktion-Varianten (v1(), v2()) durch eine entsprechende Zeigerzuweisung, insbesondere wobei die bedingte Anweisung zur Laufzeit des Steuerungsprogramms (3) ausgewertet wird.

5. Computerimplementiertes Verfahren nach Anspruch 1, **dadurch gekennzeichnet, dass** die identische Subfunktionalität (fi) und die voneinander verschiedenen Subfunktionalitäten (f1, f2) in separate Module codegeneriert werden, insbesondere auch die voneinander verschiedene Subfunktionalitäten (f1, f2) in separate Module codegeneriert werden.

6. Computerimplementiertes Verfahren nach einem der Ansprüche 1 bis 5, **dadurch gekennzeichnet, dass** das grafische Modell (6, R) mindestens zwei Submodelle (V1, V2) umfasst, wobei jedes Submodell (V1, V2) mehrere Submodellvarianten (V11, V12; V21, V22) aufweist, und die Submodellvarianten (V11, V12; V21, V22) jedes Submodells (V1, V2) in Abhängigkeit von identisch bedingten Anweisungen aufgerufen werden, dass die bedingten identischen Anweisungen zu einem einzigen gemeinsamen identischen Anweisungskomplex zusammengefasst und codegeneriert werden, wobei für die Submodellvarianten (V11, V12; V21, V22) der zwei Submodelle (V1, V2) Submodellcodefunktion-Varianten (v11, v12; v21, v22) erzeugt werden und die Submodellcodefunktion-Varianten (v11, v12; v21, v22) aus dem gemeinsamen identischen Anweisungskomplex mittels Zeigern auf die Submodellcodefunktion-Varianten ausgewählt werden.

7. Computerimplementiertes Verfahren nach Anspruch 6, **dadurch gekennzeichnet, dass** bei dem Aufruf der Submodellcodefunktion-Varianten (v11, v12; v21, v22) aus dem gemeinsamen identischen Anweisungskomplex mit-tels Zeigern Signalflussabhängigkeiten berücksichtigt werden und die Aufrufreihenfolge der Submodellcodefunktion-Varianten (v11, v12; v21, v22) dem Signalfluss entspricht.

8. Computerimplementiertes Verfahren nach einem der Ansprüche 1 bis 7, **dadurch gekennzeichnet, dass** in dem grafischen Modell (6, R) gekennzeich-net wird, welche Submodellcodefunktion (v) eines Submodells (7, V) aus dem übergreifenden Modellcode (8) mittels eines Zeigers auf die Submodellcodefunktion (v) aufgerufen wird.

9. Computerprogrammprodukt mit einem Computerprogramm, das Softwaremittel zur Durchführung eines Verfahrens nach einem der Ansprüche 1 bis 8 aufweist, wenn das Computerprogramm in einem Computer ausgeführt wird.

## Claims

1. A computer-implemented method (2) for the computer-aided translation of a graphical model (6) describing the functionality of a control program (3) into a model code (8) in a high-level programming language, wherein the graphical model (6, R) comprises at least two sub-models (7, V, V1, V2), each having at least two sub-functionalities (f1, f2, fi),
wherein the sub-functionalities (fi, f1, f2) modeled in the sub-models (7, V, V1, V2) are translated into sub-model code functions (v(), f1(), f2(), fi()) in the higher-level programming language,
wherein the model (6) is translated into an overall model code (8, r()) in the higher-level programming language, **characterized in that**
the sub-model code functions (v(), f1(), f2(), fi()) are callable from the parent model code (8, r()) by means of a pointer (*v, *f) to the respective sub-model code function (v(), f1(), f2(), fi()), and that the sub-models (V1, V2) have an identical sub-functionality (fi) and sub-functions (f1, f2) different from each other, wherein the identical sub-functionality (fi) is translated into a single sub-model code function (fi()), wherein the sub-functionalities (f1, f2) different from each other are translated into different sub-model code functions (f1(), f2()) and wherein an overall sub-model code function (v()) is generated to translate an overall functionality of the sub-models (V1, V2), comprising the identical sub-functionality (fi) and the different sub-functionalities (f1, f2) of the sub-models (V1, V2), into the overall sub-model code function (v()), wherein the overall sub-model code function (v()) calls the different sub-model code functions (f1(), f2()) through a pointer (*f).

2. The computer-implemented method according to claim 1, **characterized in that** the sub-model code functions (v(), fi(), f1(), f2()), which are called from the parent model code (8, r()) by means of a pointer (*v, *f), are code-generated into separate modules which are in particular independent of the module in which the overall model code (8, r()) is code-generated.

3. The computer-implemented method (1) according to claim 1 or 2, **characterized in that** a sub-model (7, V, V1, V2) comprises a plurality of variants (11, V1, V2) of the respective sub-functionalities and that each variant (11, V1, V2) of a respective sub-functionality is translated into a sub-model code function variant (v1(), v2()) in the higher-level programming language, in particular each sub-model code function variant (v1(), v2()) is code-generated into a separate module or all variants (11, V1, V2) of the sub-functionality are code-generated into a common module.

4. The computer-implemented method according to claim 3, **characterized in that** at least one conditional instruction is generated in the parent model code (8, r()) to select one of the sub-model code function variants (v1(), v2()) by a corresponding pointer assignment, in particular wherein the conditional instruction is evaluated at the runtime of the control program (3).

5. The computer-implemented method according to claim 1, **characterized in that** the identical sub-functionality (fi) and the sub-functionalities (f1, f2) different from each other are code-generated in separate modules, in particular the sub-functionalities (f1, f2) different from each other are also code-generated in separate modules.

6. The computer-implemented method according to one of claims 1 to 5, **characterized in that** the graphical model (6, R) comprises at least two sub-models (V1, V2), wherein each sub-model (V1, V2) has a plurality of sub-model variants (V11, V12; V21, V22), and the sub-model variants (V11, V12, V21, V22) of each sub-model (V1, V2) are called as a function of identical conditional instructions, that the conditional identical instructions are combined and code-generated into a single, common identical instruction complex, wherein sub-model code function variants (V11, V12, v21, v22) are generated for the sub-model variants (V11, V12, V21, V22) of the two sub-models (V1, V2) and the sub-model code function variants (v11, v12, v21, v22) are selected from the common identical instruction complex by means of pointers to the sub-model code function variants.

7. The computer-implemented method according to claim 6, **characterized in that** when calling the sub-model code function variants (v11, v12; v21, v22) from the common identical instruction complex by means of pointers, signal flow dependencies are taken into account and the calling order of the sub-model code function variants (v11, v12, v21, v22) corresponds to the signal flow.

8. The computer-implemented method according to one of claims 1 to 7, **characterized in that** in the graphic model (6, R), it is designated which sub-model code function (v) of a sub-model (7, V) is called from the overall model code (8) by means of a pointer to the sub-model code function (v).

9. A computer program product having a computer program that has software means for performing a method according to one of claims 1 to 8 when the computer program is executed in a computer.

## Revendications

1. Procédé (2) mis en oeuvre sur ordinateur pour la traduction assistée par ordinateur d'un modèle graphique (6) décrivant la fonctionnalité d'un programme de commande (3) en un code de modèle (8) dans un langage de programmation supérieur, sachant que le modèle graphique (6, R) présente au moins deux sous-modèles (7, V, V1, V2) avec respectivement au moins deux sous-fonctionnalités (f1, f2, fi),
sachant que les sous-fonctionnalités (fi, f1, f2) modélisées dans les sous-modèles (7, V, V1, V2) sont traduites en fonctions de code de sous-modèle (v(), f1(), f2(), fi()) dans le langage de programmation supérieur,
sachant que le modèle (6) est traduit en un code de modèle global (8, r()) dans le langage de programmation supérieur, **caractérisé en ce que**
les fonctions de code de sous-modèle (v(), f1(), f2(), fi()) peuvent être appelées au moyen d'un pointeur (*v, *f) à partir du code de modèle global (8, r()) sur la fonction de code de sous-modèle (v(), f1(), f2(), fi()) respective et que les sous-modèles (V1, V2) possèdent une sous-fonctionnalité identique (fi) et des sous-fonctionnalités (f1, f2) différentes les unes des autres, sachant que la sous-fonctionnalité identique (fi) est traduite en une seule fonction de code de sous-modèle (fi()), sachant que les sous-fonctionnalités (f1, f2) différentes les unes des autres sont traduites en fonctions de code de sous-modèle (f1(), f2()) différentes et sachant qu'une fonction de code de sous-modèle globale (v()) est générée pour traduire une fonctionnalité globale des sous-modèles (V1, V2), comprenant la sous-fonctionnalité identique (fi) et les sous-fonctionnalités différentes (f1, f2) des sous-modèles (V1, V2), en la fonction de code de sous-modèle globale (v()), sachant que la fonction de code de sous-modèle globale (v()) appelle les différentes fonctions de code de sous-modèle (f1(), f2()) par un pointeur (*f).

2. Procédé mis en oeuvre sur ordinateur selon la revendication 1, **caractérisé en ce que** les fonctions de code de sous-modèle (v(), fi(), f1(), f2()) qui sont appelées depuis le code de modèle global (8, r()) à l'aide d'un pointeur (*v, *f) sont générées sous forme de code dans des modules séparés, lesquels sont en particulier indépendants du module dans lequel est généré sous forme de code le code de modèle global (8, r()).

3. Procédé (1) mis en oeuvre sur ordinateur selon la revendication 1 ou 2, **caractérisé en ce qu'**un sous-modèle (7, V, V1, V2) comprend une multitude de variantes (11, V1, V2) des sous-fonctionnalités respectives et **en ce que** chaque variante (11, V1, V2) d'une sous-fonctionnalité respective est convertie en une variante (v1(), v2()) de code de fonction de sous-modèle dans le langage de programmation supérieur, en particulier, chaque variante (v1(), v2()) de fonction de code de sous-modèle est générée sous forme de code dans un module séparé ou toutes les variantes (11, V1, V2) de la sous-fonctionnalité sont générées sous forme de code dans un module commun.

4. Procédé mis en oeuvre sur ordinateur selon la revendication 3, **caractérisé en ce qu'**au moins une instruction conditionnelle est générée dans le code de modèle global (8, r()) pour sélectionner l'une des variantes (v1(), v2()) de fonction de code de sous-modèle par une attribution de pointeur afférente, en particulier, sachant que l'instruction conditionnelle est évaluée durant le temps d'exécution du programme de commande (3).

5. Procédé mis en oeuvre sur ordinateur selon la revendication 1, **caractérisé en ce que** la sous-fonctionnalité identique (fi) et les sous-fonctionnalités (f1, f2) différentes les unes des autres sont générées sous forme de code dans des modules séparés, en particulier, les sous-fonctionnalités (f1, f2) différentes les unes des autres sont également générées sous forme de code dans des modules séparés.

6. Procédé mis en oeuvre sur ordinateur selon l'une des revendications 1 à 5, **caractérisé en ce que** le modèle graphique (6, R) comprend au moins deux sous-modèles (V1, V2), sachant que chaque sous-modèle (V1, V2) possède une multitude de variantes de sous-modèle (V11, V12 ; V21, V22), et les variantes de sous-modèle (V11, V12 ; V21, V22) de chaque sous-modèle (V1, V2) sont appelées en fonction d'instructions conditionnelles identiques, **en ce que** les instructions conditionnelles identiques sont regroupées en un seul complexe d'instructions commun identique et générées sous forme de code, sachant que des variantes (v11, v12; v21, v22) de fonction de code de sous-modèle sont générées pour les variantes (V11, V12 ; V21, V22) de sous-modèle des deux sous-modèles (V1, V2) et les variantes (v11, v12; v21, v22) de fonction de code de sous-modèle sont sélectionnées à l'aide de pointeurs depuis le complexe d'instructions identique commun sur les variantes de fonction de code de sous-modèle.

7. Procédé mis en oeuvre sur ordinateur selon la revendication 6, **caractérisé en ce que**, lors de l'appel des variantes (v11, v12 ; v21, v22) de fonction de code de sous-modèle à partir du complexe d'instructions commun identique à l'aide de pointeurs, des dépendances de flux de signaux sont prises en compte et la séquence d'appel des variantes (v11, v12 ; v21, v22) de fonction de code de sous-modèle correspond au flux de signaux.

8. Procédé mis en oeuvre sur ordinateur selon l'une des revendications 1 à 7, **caractérisé en ce que**, dans le modèle graphique (6, R), il est marqué quelle fonction de code de sous-modèle (v) d'un sous-modèle (7, V) est appelée sur la fonction de code de sous-modèle (v) depuis le code de modèle global (8) à l'aide d'un pointeur.

9. Produit de programme informatique avec un programme informatique qui comporte des moyens logiciels pour exécuter un procédé selon l'une des revendications 1 à 8 lorsque le programme informatique est exécuté sur un ordinateur.
